# FASCICULE DE BREVET EUROPEEN

(11) **EP 2 788 699 B1**
(45) Date de publication et mention de la délivrance du brevet: **17.06.2020**
(21) Numéro de dépôt: 12720249.7
(22) Date de dépôt: 05.04.2012
(51) Int. Cl.: F25J 1/02, F25J 3/06, F25J 3/08, F25J 1/00

(54) **PROCÉDÉ ET APPAREIL DE LIQUÉFACTION D'UN GAZ RICHE EN CO2**
VERFAHREN UND VORRICHTUNG ZUM VERFLÜSSIGEN EINES CO2-REICHEN GASES
METHOD AND APPARATUS FOR LIQUEFYING A CO2-RICH GAS

(30) Priorité: 11.04.2011 FR 1153128
(43) Date de publication de la demande: 15.10.2014
(73) Titulaire: L'Air Liquide Société Anonyme pour l'Etude et l'Exploitation des Procédés Georges Claude, 75007 Paris (FR)
(72) Inventeur: DEMOLLIENS, Bertrand, F-75012 Paris (FR); LE BIHAN, Hervé, F-94370 Sucy-en-brie (FR); TRAVERSAC, Xavier, F-75012 Paris (FR)
(74) Mandataire: Mercey, Fiona Susan
(86) Numéro de dépôt international: PCT/FR2012/050743
(87) Numéro de publication internationale: WO 2012/140350

(56) Documents cités:
- FR-A3- 2 934 170
- US-A- 4 699 642
- US-A1- 2008 245 101
- ASPELUND ET AL: "Gas conditioning-The interface between CO2 capture and transport", 20070616, vol. 1, no. 3, 16 juin 2007 (2007-06-16), pages 343-354, XP022119495,

## Description

La présente invention est relative à un procédé et appareil de liquéfaction d'un gaz riche en CO₂.

Un gaz riche en dioxyde de carbone contient au moins 60% mol. de dioxyde de carbone, voire au moins 80% mol de dioxyde de carbone.

Le gaz contient également au moins une impureté plus légère que le dioxyde de carbone, telle que l'azote, l'oxygène, le monoxyde de carbone...

Une voie industrielle envisagée pour le transport du CO₂ est celle du transport par bateaux, nécessitant la liquéfaction du CO₂, par exemple issu de différentes sources : gaz de centrales à charbon, d'unités sidérurgiques, de SMR, de procédés de gazéification, etc.

Il est parfois nécessaire de transporter le CO₂ par canalisation à des pressions supercritiques et pour cela, le liquide à transporter doit être pressurisé à des pressions élevées.

Cette liquéfaction peut être précédée d'un ou plusieurs traitements des fumées (ou gaz de synthèse) par des méthodes de séparation physique et/ou chimique.

L'invention propose une solution pour gérer les variations de teneurs de la ou des sources dans des unités de liquéfaction du CO₂ afin d'éviter tout risque de gel du CO₂ dans le circuit de tenue en froid du système. Elle propose également un système de régulation optimal de(s) machine(s) tournante(s).

Dans le schéma, le gaz riche en CO₂ issu d'une ou plusieurs sources est comprimé via le compresseur de cycle ou se trouve déjà à la pression désirée pour condenser le gaz à température ambiante. Le gaz condensé est refroidi. Une partie de ce gaz condensé peut être directement comprimée à une pression suffisante pour le transport du CO₂ par canalisation. Une autre partie du gaz condensé ou tout le gaz condensé peut être est utilisé dans la boite froide. Le gaz condensé envoyé dans la boite froide a deux utilités : une partie est purifiée pour la production de CO₂ liquide, l'autre assure le bilan frigorifique par détente du gaz condensé à une ou plusieurs pressions. Le gaz condensé et détendu est ensuite vaporisé et envoyé au compresseur de cycle.

Une pression minimum de détente de gaz liquéfié dans la boite froide sera déterminée par la température de solidification du CO₂ contenu dans le gaz condensé, car la présence de solides endommagerait le système. Une marge de température sera déterminée pour éviter une prise en glace de la boîte froide (-54,5°C minimum).

On peut classiquement envisager d'optimiser l'énergie au niveau du bloc échangeur en étageant la pression et donc avoir différents paliers de liquéfaction. On pourra recycler ces flux en les introduisant aux inter-étages du compresseur centrifuge multi-intégré de cycle.

La composition en impuretés du gaz riche en CO₂ influe fortement sur les pressions d'aspiration du compresseur de cycle. Lorsque les teneurs varient, les pressions d'aspiration des différentes roues du compresseur doivent donc aussi s'adapter.

Le procédé innovant de la présente invention concerne la boucle assurant la tenue en froid du système. L'invention consiste donc à détendre le CO₂ impur dans la boîte froide à une pression qui permet de boucler le bilan frigorifique du système, tout en s'assurant de ne pas geler (température la plus froide étant limitée à -54.5°C), puis de redétendre à chaud le gaz afin d'obtenir une même pression d'aspiration constante pour le compresseur de cycle. Ce dernier sera de plus refroidi, ce qui permettra une consommation énergétique plus basse du compresseur. Par ce biais, le compresseur de cycle ne subira pas les éventuelles variations de pressions d'aspiration due à une éventuelle variation de la composition de la source.

Il est également envisageable de récupérer l'énergie de détente supplémentaire au moyen d'un arrangement turbine-compresseur afin de minimiser les pertes ou bien au moyen de turbines génératrices.

Le même liquéfacteur permettra donc de s'adapter au cas où la teneur de la source varie et/ou au cas où une source de composition différente se brancherait au liquéfacteur au cours du temps, ce qui ferait varier la composition du flux entrant, tout en garantissant la sécurité de l'installation.

L'unité peut également comporter les briques technologiques suivantes :
- Séchage du gaz par adsorption en amont du compresseur,
- Elimination ou réduction des impuretés telles que le Hg par adsorption, NOx via une colonne de distillation,
- Purification du CO₂ via une colonne de distillation,
- Amélioration du rendement CO₂ via une compression intermédiaire dans la boite froide.

Cet arrangement permet ainsi une utilisation fiable du liquéfacteur même si une des sources de CO₂ est perdue.

Si au moins une source de CO₂ impur est à la bonne pression pour la liquéfaction du CO₂, le gaz de cette source est préférentiellement choisi pour la production de CO₂ liquide.

Eventuellement la compression du gaz de l'une des sources peut être nécessaire pour égaler au moins la pression du CO₂ liquide produit.

Il est connu de liquéfier un débit de CO₂ en le comprimant et en le refroidissant selon JP-A-58208117, EP-A-0646756 et SU-A-1479802.

US-A-4699642 décrit un procédé de liquéfaction d'un gaz contenant au moins 60% mol de CO₂ selon le préambule de la revendication 1.

Selon un objet de l'invention, il est prévu un procédé de liquéfaction d'un gaz contenant au moins 60 % mol. de CO₂ et au moins une impureté légère pour produire au moins un produit liquide dans lequel un premier gaz d'alimentation contenant au moins 60 % mol. de CO₂ et au moins une impureté légère à une pression d'alimentation est refroidi pour former un débit liquide ou supercritique, éventuellement après avoir été comprimé dans un compresseur de cycle, au moins une partie du débit liquide ou supercritique est refroidie dans un échangeur de chaleur pour former un fluide de cycle à une pression de cycle, le fluide de cycle est divisé en au moins deux fractions y compris une fraction auxiliaire, une des fractions étant détendue dans une vanne jusqu'à une première pression pour former un mélange biphasique et envoyée à un séparateur de phases, la fraction liquide du séparateur de phases est vaporisée pour former un gaz vaporisé dans l'échangeur, le gaz vaporisé étant ensuite détendu depuis la première pression à une deuxième pression dans un moyen de détente et puis comprimé dans le compresseur de cycle et mélangé avec le premier gaz d'alimentation, la fraction auxiliaire soit constituant le produit liquide ou un des produits liquides soit étant traitée par séparation à température subambiante dans au moins un moyen de séparation pour former le produit liquide ou un des produits liquides, et dans lequel on varie la première pression en fonction de la quantité d'impuretés plus légères que le dioxyde de carbone contenu dans le gaz riche en dioxyde de carbone caractérisé en ce que l'on varie la première pression de sorte que plus la concentration en impuretés légères est élevée, plus la première pression est élevée.

Selon d'autres caractéristiques facultatives :
- la deuxième pression est substantiellement constante et indépendante de la composition du gaz riche en dioxyde de carbone,
- la deuxième pression est égale à la pression d'entrée du compresseur de cycle et le gaz détendu dans le moyen de détente est envoyé directement du moyen de détente à l'entrée du compresseur de cycle,
- la première pression est choisie pour être supérieure à la pression à laquelle le gaz riche en dioxyde de carbone se solidifierait dans le séparateur de phase ou dans la vanne
- le taux de détente dans le moyen de détente est régulé en fonction de la composition du gaz à détendre dans le moyen de détente et/ou en fonction de la composition du fluide détendu dans la vanne de détente.
- le taux de détente dans le moyen de détente est régulé en fonction de la quantité d'impuretés légères dans le gaz à détendre dans le moyen de détente et/ou en fonction de la composition du fluide détendu dans la vanne de détente.

Selon un autre objet de l'invention, il est prévu un appareil de liquéfaction d'un gaz contenant au moins 60% mol. de CO₂ et au moins une impureté légère pour produire au moins un produit liquide selon un procédé d'une des revendications 1 à 8, comprenant un échangeur de chaleur, un compresseur de cycle, un moyen de refroidissement, une conduite pour envoyer un gaz d'alimentation contenant au moins 60% mol. de CO₂ et au moins une impureté légère au moyen de refroidissement pour former un liquide ou un fluide supercritique, une conduite pour envoyer le liquide ou le fluide supercritique à l'échangeur pour former un fluide refroidi, une conduite pour envoyer une partie du fluide refroidi comme fraction auxiliaire à un client ou à un traitement, une vanne de détente, une conduite pour envoyer une partie du fluide refroidi à la vanne de détente, un séparateur de phases, une conduite pour envoyer un fluide détendu dans la vanne de détente au séparateur de phases, une conduite pour envoyer le liquide du séparateur de phases à l'échangeur, un moyen de détente, une conduite pour envoyer le liquide vaporisé dans l'échangeur au moyen de détente pour former un gaz détendu, une conduite pour envoyer le gaz détendu à un compresseur de cycle, des moyens pour mélanger le gaz détendu avec le gaz contenant au moins 60% mol de CO₂ en amont de, en aval de ou dans le compresseur de cycle et des moyens pour varier la pression de sortie de la vanne de détente en fonction de la composition du gaz d'alimentation caractérisé en ce que le moyen de détente est une turbine.

Selon d'autres caractéristiques facultatives :
- l'appareil comprend une unité de traitement reliée à la conduite pour envoyer une partie du fluide refroidi comme fraction auxiliaire à un traitement, l'unité de traitement étant une unité de liquéfaction ou une unité de séparation à température subambiante.
- l'appareil comprend un moyen de détection de la température du fluide à détendre et/ou de la température du fluide détendu dans la vanne de détente et un moyen de variation du taux de détente dans la vanne de détente en fonction de cette température ou ces température.
- l'appareil comprend un moyen de détection de la concentration du gaz envoyé au moyen de détente et/ou du fluide envoyé à la vanne de détente et un moyen de variation du taux de détente du moyen de détente en fonction de cette concentration.
- l'appareil comprend un moyen de détection de la pression du gaz envoyé au moyen de détente et un moyen de variation du taux de détente dans le moyen de détente en fonction de cette pression
- la turbine est couplée au compresseur de cycle ou l'unité de traitement comprend un compresseur et la turbine est couplée au compresseur de l'unité de traitement.
- l'échangeur est agencé de sorte que la chaleur latente de vaporisation du liquide du séparateur de phases est transférée au liquide ou au fluide supercritique qui se refroidit à travers l'échangeur.

L'invention sera décrite en plus de détail en se référant aux figures qui représentent des procédés selon l'invention.

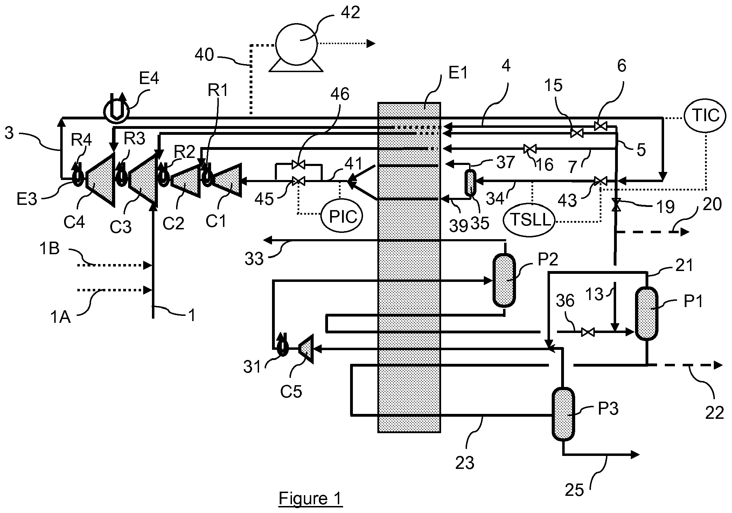

Dans la Figure 1, qui montre un procédé selon l'invention, l'appareil comprend un échangeur de chaleur E1, une pompe 42, un compresseur à quatre étages C1, C2, C3, C4 et une série de séparateurs de phase P1, P2, P3.

Les séparateurs de phase, l'échangeur de chaleur et les vannes de détente se trouvent dans une boîte froide.

Un mélange de gaz de trois sources différentes est liquéfié pour former un débit de CO₂ supercritique et purifié pour former un débit liquide de CO₂ pur.

Le gaz 1, contenant au moins 60 % mol. de CO₂ et au moins une impureté légère, ici l'azote, à une première pression provenant d'une cogénération est mélangé avec les gaz 1A, 1B et le mélange formé est envoyé au troisième étage C3 d'un compresseur à quatre étages. Le gaz est refroidi par le refroidisseur R3, comprimé dans le quatrième étage C4 jusqu'à une deuxième pression au-delà de la pression critique, par exemple 83 bars abs et puis refroidi dans les échangeurs E3, E4 pour former un fluide supercritique 3. Si la pression est en dessous de la pression critique, un liquide sera évidemment formé.

Le ou les gaz d'alimentation peuvent être séchés par adsorption en amont de l'échangeur E4 ou en amont du compresseur.

Eventuellement une partie 40 du fluide n'est pas envoyé à l'échangeur de chaleur E1 mais est pressurisée par la pompe 42 jusqu'à une pression de 150 bars abs pour former un produit, par exemple à envoyer dans une canalisation. Le reste du fluide ou le fluide à la pression de sortie de l'étage C4 est refroidi liquéfié dans l'échangeur E1 pour former un fluide supercritique ou liquide de cycle. Pour le cas présent, il est considéré qu'il s'agit d'un fluide supercritique. Le fluide supercritique à 83 bars abs est divisé en au moins cinq fractions. Une fraction 4 est détendue dans la vanne 6, jusqu'à une très haute pression, refroidie dans l'échangeur E1 et envoyée au troisième étage C4 du compresseur. Une fraction 5 est détendue dans la vanne 15 jusqu'à une haute pression, refroidie dans l'échangeur et envoyée au troisième étage C3 du compresseur. Une fraction 7 est détendue dans une vanne 16 jusqu'à une moyenne pression, refroidie dans l'échangeur E1 et envoyée à l'entrée du deuxième étage C2 du compresseur. Une fraction basse pression 34 est détendue dans une vanne 43. Le mélange formé des gaz 1, 1A, 1B contient du CO₂ et uniquement de l'azote en tant qu'impureté légère mais en quantités variables. Pour s'assurer que la fraction 34 de fluide supercritique 3 ne gèlera pas en se détendant dans la vanne 43 à partir de 83 bars abs, on calcule une pression de détente comme illustré dans le tableau suivant :

| **% mol. N**₂ **dans débit 34** | **Pression plus basse de vaporisation** |
|---|---|
| | bar abs |
| 0.035 | 5.85 |
| 1 | 7.9 |
| 2 | 8.9 |

Cela signifie que dans la vanne 43, la détente effective du fluide jusqu'à la plus basse pression s'effectuera de 83 bars abs à respectivement 5,85, 7,9 ou 8,9 bars abs en fonction de la quantité d'azote présente dans le fluide entrant. Le mélange biphasique en sortie de la vanne 43 est envoyé au séparateur de phase 35. Le liquide formé 39 et le gaz formé 37 sont refroidis dans l'échangeur E1 et mélangés. Le mélangé 41 est détendu dans une vanne chaude 45 jusqu'à une pression de 5,85 bars abs, afin de garder une pression constante à l'aspiration du compresseur de cycle. La pression d'entrée de la vanne chaude 45 est donc variable puisqu'il n'y a ni détente ni pressurisation entre la vanne chaude 45 et la vanne 43.

Le contrôle de cette pression de sortie de vanne 43 est fait en détectant la température du débit détendu à la sortie de la vanne 43 pour vérifier qu'elle ne soit pas en dessous de -54,5°C et en détectant la température du liquide 3 sous-refroidi dans l'échangeur E1. Plus le taux d'incondensables dans le débit 34 est élevé, plus le débit 34 sera refroidi rapidement avec la détente. Les incondensables sont en effet plus volatils par définition : on ne détendra donc pas jusqu'à une pression aussi basse si le débit 34 est constitué de CO₂ pur.

On peut remarquer un moyen de détection de température TIC qui mesure la température du liquide sous-refroidi 3 et un moyen de détection de température TSLL qui mesure la température du fluide détendu dans la vanne 43. Une limite de température basse à ne pas dépasser est fixée et des alarmes sont déclenchées si la température passe en dessous d'une température 1°C au-dessus de la limite et 0,5°C au-dessus de limite pour permettre de régler la détente de la vanne, en fonction de ces températures. Ainsi si on constate une réduction de température dans le fluide à la sortie de la vanne 43, qui indique une baisse de pureté du fluide 3, on augmentera la pression de sortie de cette vanne. De même, si la température du fluide détendu augmente, on baissera la pression de sortie de la vanne 43.

La vanne chaude 45 reçoit du gaz à des pressions différentes. Le taux de détente de cette vanne est donc réglé en fonction de la pression du débit 41 mesuré par un analyseur PIC. Si le liquide 3 est suffisamment pur, le procédé selon l'invention n'est pas utilisé car il n'est pas nécessaire de détendre le liquide 34 à une pression au-dessus de la pression d'entrée du compresseur C1. Dans ce cas, le liquide vaporisé est envoyé à une vanne de contournement 46 qui ne le détend pas, ou substantiellement pas.

Le reste du liquide 13 est détendu dans une vanne 19 (ou une turbine liquide), sans passer par l'échangeur E1, et envoyé à un séparateur de phases P1. Dans le séparateur de phases, il forme un liquide 23 et un gaz 21. Le liquide 23 est chauffé dans l'échangeur puis envoyé au troisième séparateur de phases P3. Le liquide de ce séparateur est le produit riche en dioxyde de carbone 25 de l'appareil, à -50°C et 7 bar abs. Les gaz des séparateurs P1 et P3 sont mélangés, réchauffés dans l'échangeur E1, comprimés par un compresseur C5, refroidis dans un refroidisseur 31 puis refroidis dans l'échangeur E1 et envoyés au deuxième séparateur de phases P2. Le gaz 33 de ce séparateur est réchauffé dans l'échangeur E1. Le liquide est réchauffé dans l'échangeur comme débit 36 puis mélangé avec la fraction 13 envoyée au séparateur P1.

Il est évident que le procédé ne comprend pas obligatoirement le traitement de la fraction 13. Dans ce cas, le liquide 20 constitue un des produits liquide du procédé.

Il est également possible de traiter la fraction 13 par distillation pour produire un produit liquide riche en dioxyde de carbone ou de la traiter tout simplement pour enlever une partie gazeuse, la partie 22 constituant un produit liquide. Par exemple, une colonne d'élimination de mercure et/ou de NOx peut être prévue à la place de ou ainsi qu'une colonne d'élimination d'azote ou d'oxygène.

Il est envisageable que le procédé soit alimenté par une seule source et que la composition du gaz d'alimentation varie dans le temps. Dans ce cas, il sera nécessaire d'ajuster la pression jusqu'à laquelle la vanne 43 détend le liquide 34. Du coup la pression d'entrée de la vanne 45 sera également modifiée mais la pression de sortie de la vanne 45 restera constante.

Il est également possible que la provenance des gaz d'alimentation varie dans le temps, puisqu'un gaz d'alimentation à composition différente commence à alimenter le procédé en cours d'opération. Dans ce cas, il est nécessaire de pouvoir tenir compte d'une éventuelle composition à teneur augmentée en impuretés légères pendant le fonctionnement du procédé.

Il sera compris que, réduit à sa plus simple expression, le procédé ne nécessite que de vaporiser le débit 34 à la pression la plus basse. Les autres vaporisations à des pressions plus élevées permettent d'améliorer le diagramme d'échange mais ne sont pas essentielles.

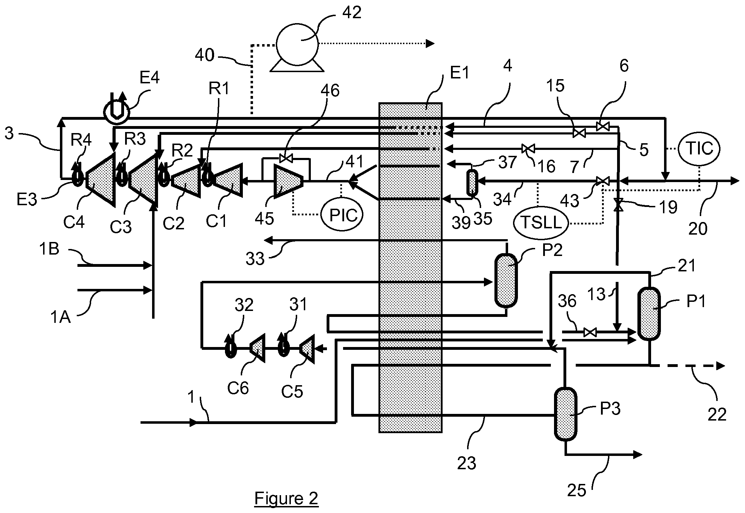

Selon la Figure 2, qui montre un procédé et un appareil selon l'invention, si le taux d'impuretés légères dans le débit 3 est élevé, la présence du compresseur C5 dit de rendement dans le système de traitement du fluide 13 de la Figure 1 devient particulièrement avantageuse. Dans ce cas et selon l'appareil revendiqué par l'invention la vanne 45 de la Figure 1 est remplacée par une turbine 45 qui est couplée au compresseur C5.

Dans cette figure, une portion 1 du gaz d'alimentation est déjà à une pression suffisamment élevée pour être liquéfié dans l'échangeur E1. Deux débits 1A, 1B à la première pression sont donc comprimés jusqu'à la deuxième pression en étant envoyés au troisième étage du compresseur, comme décrit précédemment et l'autre débit 1 à la deuxième pression est envoyé directement à l'échangeur E1 où il se liquéfie au moins partiellement avant d'être envoyé au séparateur de phases. Il sera apprécié que le débit 1 peut être le seul débit traité dans le séparateur de phases ou sinon qu'il peut être mélangé avec la fraction 13. Cette façon de procéder permet également de gérer le cas dans lequel le débit 1 et les débits 1A, 1B ont des puretés très différentes. Par exemple le débit 1 peut être envoyé soit au séparateur P1, soit au séparateur P2, soit au séparateur P3 selon sa composition.

A la différence de la Figure 1, les gaz de tête des séparateurs de phases P1, P2 sont comprimés par un compresseur C5, refroidis dans le refroidisseur 31 puis comprimé par un compresseur C6 et ensuite refroidis dans le refroidisseur 32 avant d'être refroidis dans l'échangeur E1 en amont du séparateur P2. La turbine 45 est couplée au compresseur C5 ou au compresseur C6.

La régulation est effectuée comme pour la Figure 1 sauf que le taux de détente de la turbine 46 est réglé en fonction de la pression du débit 41.

Il est possible de coupler la turbine 45 au compresseur C1.

## Revendications

1. Procédé de liquéfaction d'un gaz contenant au moins 60 % mol. de CO₂ et au moins une impureté plus légère que le dioxyde de carbone pour produire au moins un produit liquide dans lequel un premier gaz d'alimentation, contenant au moins 60 % mol. de CO₂ et au moins une impureté légère, à une pression d'alimentation est refroidi pour former un débit liquide ou supercritique, éventuellement après avoir été comprimé dans un compresseur de cycle, au moins une partie du débit liquide ou supercritique est refroidie dans un échangeur de chaleur (E1) pour former un fluide de cycle à une pression de cycle, le fluide de cycle est divisé en au moins deux fractions y compris une fraction auxiliaire, une des fractions étant détendue dans une vanne (43) jusqu'à une première pression pour former un mélange diphasique et envoyée à un séparateur de phases (35), la fraction liquide du séparateur de phases est vaporisée pour former un gaz vaporisé dans l'échangeur, le gaz vaporisé étant ensuite détendu depuis la première pression à une deuxième pression dans un moyen de détente (45) et puis comprimé dans un/le compresseur de cycle (C1) et mélangé avec le premier gaz d'alimentation, la fraction auxiliaire soit constituant le produit liquide ou un des produits liquides soit étant traitée par séparation à température subambiante dans au moins un moyen de séparation pour former le produit liquide ou un des produits liquides, et dans lequel on varie la première pression en fonction de la quantité d'impureté plus légères que le dioxyde de carbone contenu dans le gaz riche en dioxyde de carbone **caractérisé en ce que** l'on varie la première pression de sorte que plus la concentration en impuretés légères est élevée, plus la première pression est élevée.

2. Procédé selon la revendication 1 dans lequel. le premier gaz d'alimentation est refroidi pour former un débit liquide ou supercritique, après avoir été comprimé dans un compresseur de cycle (C3, C4),

3. Procédé selon la revendication 1 ou 2 dans lequel la deuxième pression est substantiellement constante et indépendante de la composition du gaz riche en dioxyde de carbone.

4. Procédé selon l'une des revendications précédentes dans lequel la deuxième pression est égale à la pression d'entrée du compresseur de cycle (C1) et le gaz détendu dans le moyen de détente est envoyé directement du moyen de détente (45) à l'entrée du compresseur de cycle.

5. Procédé selon l'une des revendications précédentes dans lequel la première pression est choisie pour être supérieure à la pression à laquelle le gaz riche en dioxyde de carbone se solidifierait dans le séparateur de phase (35) ou dans la vanne (43).

6. Procédé selon l'une des revendications précédentes dans lequel le taux de détente dans le moyen de détente (45, 46) est régulé en fonction de la composition du gaz à détendre dans le moyen de détente et/ou en fonction de la composition du fluide détendu dans la vanne de détente (43).

7. Procédé selon la revendication 6 dans lequel le taux de détente dans le moyen de détente (45) est régulé en fonction de la quantité d'impuretés légères dans le gaz à détendre dans le moyen de détente et/ou en fonction de la composition du fluide détendu dans la vanne de détente (43).

8. Appareil de liquéfaction d'un gaz contenant au moins 60% mol. de CO₂ et au moins une impureté plus légère que le dioxyde de carbone pour produire au moins un produit liquide selon un procédé d'une des revendications précédentes, comprenant un échangeur de chaleur (E1), un compresseur de cycle (C1), un moyen de refroidissement (E4), une conduite pour envoyer un gaz d'alimentation, contenant au moins 60% mol. de CO₂ et au moins une impureté légère, au moyen de refroidissement pour former un liquide ou un fluide supercritique, une conduite pour envoyer le liquide ou le fluide supercritique à l'échangeur pour former un fluide refroidi, une conduite pour envoyer une partie du fluide refroidi comme fraction auxiliaire à un client ou à un traitement, une vanne de détente (43), une conduite pour envoyer une partie du fluide refroidi à la vanne de détente, un séparateur de phases (35), une conduite pour envoyer un fluide détendu dans la vanne de détente au séparateur de phases, une conduite pour envoyer le liquide du séparateur de phases à l'échangeur, un moyen de détente (45), une conduite pour envoyer le liquide vaporisé dans l'échangeur au moyen de détente pour former un gaz détendu, une conduite pour envoyer le gaz détendu à un compresseur de cycle, des moyens pour mélanger le gaz détendu avec le gaz contenant au moins 60% mol de CO₂ en amont de, en aval de ou dans le compresseur de cycle, des moyens (TIC, TSLL) pour varier la pression de sortie de la vanne de détente en fonction de la composition du gaz d'alimentation, et dans lequel le moyen de détente est une turbine (45).

9. Appareil selon l'une des revendication 8 comprenant une unité de traitement (P1, P2, P3) reliée à la conduite pour envoyer une partie du fluide refroidi comme fraction auxiliaire à un traitement, l'unité de traitement étant une unité de liquéfaction ou une unité de séparation à température subambiante.

10. Appareil selon les revendications 8 ou 9 dans lequel la turbine (45) est couplée au compresseur de cycle (C1).

11. Appareil selon les revendications 8 ou 9 dans lequel l'unité de traitement comprend un compresseur (C5, C6) et la turbine est couplée au compresseur de l'unité de traitement.

12. Appareil selon l'une des revendications 8 à 11 comprenant un moyen de détection de la concentration du gaz envoyé au moyen de détente et/ou du fluide envoyé à la vanne de détente et un moyen de variation du taux de détente du moyen de détente en fonction de cette concentration.

13. Appareil selon la revendication 12 comprenant un moyen de détection de la pression du gaz envoyé au moyen de détente et un moyen de variation du taux de détente dans le moyen de détente en fonction de cette pression.

14. Appareil selon l'une des revendications 8 à 13 dans lequel l'échangeur est agencé de sorte que la chaleur latente de vaporisation du liquide du séparateur de phases est transférée au liquide ou au fluide supercritique qui se refroidit à travers l'échangeur.

## Patentansprüche

1. Verfahren zum Verflüssigen eines Gases, das mindestens 60 Mol-% CO₂ und mindestens eine Verunreinigung, die leichter als Kohlendioxid ist, enthält, um mindestens ein flüssiges Produkt zu erzeugen, wobei ein erstes Versorgungsgas, das mindestens 60 Mol-% CO₂ und mindestens eine leichte Verunreinigung enthält, bei einem Versorgungsdruck abgekühlt wird, um einen flüssigen oder superkritischen Durchsatz zu bilden, nachdem es eventuell in einem Zykluskompressor komprimiert wurde, mindestens ein Teil des flüssigen oder superkritischen Durchsatzes in einem Wärmeaustauscher (E1) abgekühlt wird, um ein Zyklusfluid mit einem Zyklusdruck zu bilden, das Zyklusfluid in mindestens zwei Fraktionen, inklusive einer Hilfsfraktion, geteilt wird, eine der Fraktionen in einem Ventil (43) bis auf einen ersten Druck expandiert wird, um ein diaphasisches Gemisch zu bilden, und zu einem Phasentrenner (35) geleitet wird, die flüssige Fraktion des Phasentrenners verdampft wird, um ein verdampftes Gas im Austauscher zu bilden, das verdampfte Gas anschließend in einem Expansionsmittel (45) vom ersten Druck auf einen zweiten Druck expandiert wird und dann in einem/dem Zykluskompressor (C1) komprimiert wird und mit dem ersten Versorgungsgas gemischt wird, die Hilfsfraktion entweder das flüssige Produkt oder eines der flüssigen Produkte darstellt, oder durch Trennung bei unteratmosphärischer Temperatur in mindestens einem Trennmittel behandelt wird, um das flüssige Produkt oder eines der flüssigen Produkte zu bilden, und wobei der erste Druck in Abhängigkeit von der Menge an im kohlendioxidreichen Gas enthaltenen Verunreinigungen, die leichter als Kohlenstoff sind, variiert wird, **dadurch gekennzeichnet, dass** der erste Druck so variiert wird, dass, je höher die Konzentration an leichten Verunreinigungen ist, desto höher auch der erste Druck ist.

2. Verfahren nach Anspruch 1, wobei das erste Versorgungsgas abgekühlt wird, um einen flüssigen oder superkritischen Durchsatz zu bilden, nachdem es in einem Zykluskompressor (C3, C4) verdichtet wurde.

3. Verfahren nach Anspruch 1 oder 2, wobei der zweite Druck im Wesentlichen konstant und unabhängig von der Zusammensetzung des kohlendioxidreichen Gases ist.

4. Verfahren nach einem der vorstehenden Ansprüche, wobei der zweite Druck gleich dem Eingangsdruck des Zykluskompressors (C1) ist und das im Expansionsmittel expandierte Gas direkt vom Expansionsmittel (45) zum Eingang des Zykluskompressors geleitet wird.

5. Verfahren nach einem der vorstehenden Ansprüche, wobei der erste Druck ausgewählt ist, um höher als der Druck zu sein, bei dem sich das kohlendioxidreiche Gas im Phasentrenner (35) oder im Ventil (43) verfestigen würde.

6. Verfahren nach einem der vorstehenden Ansprüche, wobei die Expansionsrate im Expansionsmittel (45, 46) in Abhängigkeit von der Zusammensetzung des im Expansionsmittel zu expandierenden Gases und/oder in Abhängigkeit von der Zusammensetzung des im Expansionsventil (43) expandierten Fluids reguliert wird.

7. Verfahren nach Anspruch 6, wobei die Expansionsrate im Expansionsmittel (45) in Abhängigkeit von der Menge an leichten Verunreinigungen im Gas, das im Expansionsmittel zu expandieren ist, und/oder in Abhängigkeit von der Zusammensetzung des im Expansionsventil (43) expandierten Fluids reguliert wird.

8. Einrichtung zum Verflüssigen eines Gases, das mindestens 60 Mol-% CO₂ und mindestens eine Verunreinigung, die leichter als Kohlendioxid ist, enthält, um mindestens ein Produkt gemäß einem Verfahren nach einem der vorstehenden Ansprüche zu erzeugen, umfassend einen Wärmeaustauscher (E1), einen Zykluskompressor (C1), ein Abkühlmittel (E4), eine Leitung, um ein Versorgungsgas, das mindestens 60 Mol-% CO₂ und mindestens eine leichte Verunreinigung enthält, zum Abkühlmittel zu leiten, um eine Flüssigkeit oder ein superkritisches Fluid zu bilden, eine Leitung, um die Flüssigkeit oder das superkritische Fluid zum Austauscher zu leiten, um ein abgekühltes Fluid zu bilden, eine Leitung, um einen Teil des abgekühlten Fluids als Hilfsfraktion an einen Klienten oder zu einer Behandlung zu leiten, ein Expansionsventil (43), eine Leitung, um einen Teil des abgekühlten Fluids zum Expansionsventil zu leiten, einen Phasentrenner (35), eine Leitung, um ein im Expansionsventil expandiertes Fluid zum Phasentrenner zu leiten, eine Leitung, um die Flüssigkeit vom Phasentrenner zum Austauscher zu leiten, ein Expansionsmittel (45), eine Leitung, um die im Austauscher verdampfte Flüssigkeit zum Expansionsmittel zu leiten, um ein expandiertes Gas zu bilden, eine Leitung, um das expandierte Gas zu einem Zykluskompressor zu leiten, Mittel, um das expandierte Gas mit dem Gas, das mindestens 60 Mol-% CO₂ enthält, stromaufwärts des Zykluskompressors, stromabwärts davon oder im Zykluskompressor zu mischen, Mittel (TIC, TSLL), um den Ausgangsdruck des Expansionsventils in Abhängigkeit von der Zusammensetzung des Versorgungsgases zu variieren und wobei das Expansionsmittel eine Turbine (45) ist.

9. Einrichtung nach einem der Ansprüche 8, umfassend eine Behandlungseinheit (P1, P2, P3), die mit der Leitung verbunden ist, um einen Teil des abgekühlten Fluids als Hilfsfraktion zu einer Behandlung zu leiten, wobei die Behandlungseinheit eine Verflüssigungseinheit oder eine Trenneinheit bei unteratmosphärischer Temperatur ist.

10. Einrichtung nach den Ansprüchen 8 oder 9, wobei die Turbine (45) an den Zykluskompressor (C1) gekoppelt ist.

11. Einrichtung nach den Ansprüchen 8 oder 9, wobei die Behandlungseinheit einen Kompressor (C5, C6) umfasst und die Turbine an den Kompressor der Behandlungseinheit gekoppelt ist.

12. Einrichtung nach einem der Ansprüche 8 bis 11, umfassend ein Mittel zur Erfassung der Konzentration des Gases, das zum Expansionsmittel geleitet wird, und/oder des Fluids, das zum Expansionsventil geleitet wird, und ein Mittel zum Variieren des Expansionsverhältnisses des Expansionsmittels in Abhängigkeit von dieser Konzentration.

13. Einrichtung nach Anspruch 12, umfassend ein Mittel zum Erfassen des Drucks des Gases, das an das Expansionsmittel geleitet wird, und ein Mittel zum Variieren des Expansionsverhältnisses im Expansionsmittel in Abhängigkeit von diesem Druck.

14. Einrichtung nach einem der Ansprüche 8 bis 13, wobei der Austauscher so eingerichtet ist, dass die latente Verdampfungswärme der Flüssigkeit des Phasentrenners zur Flüssigkeit oder zum superkritischen Fluid übertragen wird, das sich durch den Austauscher hindurch abkühlt.

## Claims

1. Method for liquefying a gas containing at least 60 mol % of CO₂ and at least one impurity lighter than carbon dioxide to produce at least one liquid product wherein a first feed gas, containing at least 60 mol % of CO₂ and at least one light impurity, at a feed pressure is cooled to form a liquid or supercritical flow, optionally having been compressed in a cycle compressor, at least one portion of the liquid or supercritical flow is cooled in a heat exchanger (E1) to form a cycle fluid having a cycle pressure, the cycle fluid is divided into at least two fractions including an auxiliary fraction, one of the fractions being expanded up to a first pressure in a valve (43) to form a biphasic mixture and sent to a phase separator (35), the liquid fraction of the phase separator is vaporised so as to form a vaporised gas in the exchanger, the vaporised gas then being expanded from the first pressure to a second pressure in an expansion means (45) and then being compressed in a/the cycle compressor (C1) and mixed with the first feed gas, the auxiliary fraction either comprises the liquid product or one of the liquid products or is treated by separation at subambient temperature in at least one separation means to form the liquid product or one of the liquid products, and wherein the first pressure is varied according to the quantity of impurities lighter than the carbon dioxide contained in the carbon-dioxide-rich gas **characterised in that** the first pressure is varied such that the higher the concentration in light impurities is, the higher the first pressure is.

2. Method according to claim 1, wherein the first feed gas is cooled to form a liquid or supercritical flow, after having been compressed in a cycle compressor (C3, C4).

3. Method according to claim 1 or 2, wherein the second pressure is substantially constant and independent of the composition of the carbon-dioxide-rich gas.

4. Method according to one of the preceding claims, wherein the second pressure is equal to the inlet pressure of the cycle compressor (C1) and the gas expanded in the expansion means is sent directly from the expansion means (45) to the inlet of the cycle compressor.

5. Method according to one of the preceding claims, wherein the first pressure is chosen to be greater than the pressure at which the carbon-dioxide-rich gas would solidify in the phase separator (35) or in the valve (43).

6. Method according to one of the preceding claims, wherein the rate of expansion in the expansion means (45, 46) is adjusted according to the composition of the gas to be expanded in the expansion means and/or according to the composition of the fluid expanded in the expansion valve (43).

7. Method according to claim 6, wherein the rate of expansion in the expansion means (45) is adjusted according to the quantity of light impurities in the gas to be expanded in the expansion means and/or according to the composition of the fluid expanded in the expansion valve (43).

8. Apparatus for liquefying a gas containing at least 60 mol % of CO₂ and at least one impurity lighter than carbon dioxide to produce at least one liquid product according to a method of one of the preceding claims, comprising a heat exchanger (E1), a cycle compressor (C1), a cooling means (E4), a duct for sending a feed gas, containing at least 60 mol % of CO₂ and at least one light impurity, to the cooling means to form a liquid or supercritical fluid, a duct for sending the liquid or supercritical fluid to the exchanger to form a cooled fluid, a duct for sending a portion of the cooled fluid as an auxiliary fraction to a client or to a treatment, an expansion valve (43), a duct for sending a portion of the cooled fluid to the expansion valve, a phase separator (35), a duct for sending a fluid expanded in the expansion valve to the phase separator, a duct for sending the liquid from the phase separator to the exchanger, an expansion means (45), a duct for sending the liquid vaporised in the exchanger to the expansion means to form an expanded gas, a duct for sending the expanded gas to a cycle compressor, means for mixing the gas expanded gas with the gas containing at least 60 mol % of CO₂ upstream from, downstream from or in the cycle compressor, means (TIC, TSLL) for varying the outlet pressure of the expansion according to the composition of the feed gas, and wherein the expansion means is a turbine (45).

9. Apparatus according to claim 8 comprising a treatment unit (P1, P2, P3) connected to the duct for sending a portion of the cooled fluid as an auxiliary fraction to a treatment, the treatment unit being a liquefaction unit or a separation unit at subambient temperature.

10. Apparatus according to claims 8 or 9, wherein the turbine (45) is coupled to the cycle compressor (C1).

11. Apparatus according to claims 8 or 9, wherein the treatment unit comprises a compressor (C5, C6) and the turbine is coupled to the compressor of the treatment unit.

12. Apparatus according to one of claims 8 to 11 comprising a means for detecting the concentration of the gas sent to the expansion means and/or of the fluid sent to the expansion valve and a means for varying the rate of the expansion of the expansion means according to this concentration.

13. Apparatus according to claim 12 comprising a means for detecting the pressure of the gas sent to the expansion means and a means for varying the rate of expansion in the expansion means according to this pressure.

14. Apparatus according to one of claims 8 to 13, wherein the exchanger is arranged such that the latent heat of the vaporisation of the liquid of the phase separator is transferred to the liquid or to the supercritical fluid which cools through the exchanger.
